# EUROPEAN PATENT SPECIFICATION

(11) **EP 2 874 721 B1**
(45) Date of publication and mention of the grant of the patent: **28.03.2018**
(21) Application number: 12805792.4
(22) Date of filing: 09.11.2012
(51) Int. Cl.: A63F 13/211, A63F 13/213, A63F 13/212, A63F 13/2145, A63F 13/215, A63F 13/216, A63F 13/235, A63F 13/245, A63F 13/98

(54) **INTERACTIVE EMBODIED ROBOT VIDEOGAME THROUGH THE USE OF SENSORS AND PHYSICAL OBJECTS**
KÖRPERLICH INTERAKTIVES ROBOTERVIDEOSPIEL UNTER NUTZUNG VON SENSOREN UND PHYSIKALISCHEN OBJEKTEN
JEU VIDÉO INTERACTIF DE ROBOT PERSONIFIÉ UTILISANT DES CAPTEURS ET DES OBJETS PHYSIQUES

(30) Priority: 09.11.2011 PT 2011105993
(43) Date of publication of application: 27.05.2015
(73) Proprietor: Conceição, Marta Isabel Santos Paiva Ferraz, 2850 - Aroeira (PT)
(72) Inventor: Conceição, Marta Isabel Santos Paiva Ferraz, 2850 - Aroeira (PT)
(74) Representative: Ferreira, Maria Silvina
(86) International application number: PCT/PT2012/000044
(87) International publication number: WO 2013/070103

(56) References cited:
- US-A1- 2007 097 832
- US-A1- 2007 239 479
- US-A1- 2008 319 252
- LIN ZHONG ET AL: "A Phone-Centered Body Sensor Network Platform: Cost, Energy Efficiency & User Interface", WEARABLE AND IMPLANTABLE BODY SENSOR NETWORKS, 2006. BSN 2006. INTERNA TIONAL WORKSHOP ON CAMBRIDGE, MA, USA 03-05 APRIL 2006, PISCATAWAY, NJ, USA,IEEE, 3 April 2006 (2006-04-03), pages 179-182, XP010911507, ISBN: 978-0-7695-2547-1

## Description

### Field of the invention

This invent relates to an interactive embodied robot videogame through the use of sensors and physical objects. The invention as well as an apparatus is a method of communication and interactivity.
The invention can be used in many places, namely in house, streets, playgrounds, schools and rehabilitation centres.
The invention integrates a self-sustainable system: solar energy is captured (by a solar battery) and converted into electric energy to power all the components of the system apparatus.

### State of the art

The present invention falls within the area of videogames (HumanComputer Interaction), integrating robots for videogames, with various input and output auxiliary machinery, for increased interactivity between the users and the videogame (biologic and biomechanic human enhancement). The relevant documents to the current state of the art are, in particular, the patents no. US2006223637, US2009291764, US2007256541, US200797832, US2007239479, JP2011147490 e JP2006181300.

### Summary

The present invention relates to a robot videogame with electronic wireless sensors and connection with physical objects, which operates through a computer.
The invention apparatus is used in mixed reality environments, virtual and physical realities, in combining virtual and physical spatial contexts at indoors and outdoors, allowing also for different physical (body-to-body interactions) and virtual (Virtual teleportation) geographical connections, in a virtual/physical collaborative platform between various robot videogame apparatus.
The users are the players who perform the interactive robot videogame, whereas the connection between the players and the invention is made through the use of electronic wireless sensors, other players and many physical objects.

### 1. The robot witch the videogame is incorporate

The robot referred to in the present invention has a semi-human appearance, integrating a head, a stem and a support allowing its displacement on the physical space.
On the front of the robot head, in particular in the area of the eyes are located: a sound LED with a video camera and a mechanical lever. On the back of the head of the robot is located a rotation sensor.
The robot has a rubber torso in which is located on the front: a solar battery and LEDs sensors. On the back of the robot are located: the heart rate and galvanic skin response sensors; the multi-touch computer display; multiplayer button; microphone; and an intensity sensor.

The microphone detects and recognizes user's real-time verbal speech input and gives real-time verbal speech answer output (through the LED/ sound eye), according to the initial user's input.

The robot has a triangular base with support for the user's feet, three suspensions, three rubber pneumatic wheels and an accelerometer sensor.
Between the rubber torso and the triangular base is located a plastic leveler sensor that allows the change of the height of the robot.
Wireless Bluetooth transceivers are coupled to the sensors: receive digital signals from the sensors and transmits them through digital message to the multi-touch computer display. All of the components that characterize the invention are detachable, which give the users the possibility of transforming the appearance and interaction options with the apparatus. The assembly of the invention apparatus is modular making the system personalized to each user.
This modification operates through Velcro strips placed in the wireless electronically sensors and that can connect with the robot rubber torso. According to this advantage each player can build a different apparatus, with different appearances and functionalities.

### 2. Robot videogame performance

In real-time, the interactive videogame reacts to the input from the user's body physical actions, physiological signals and speech recognition, to obtain, in real-time output, in the virtual game avatar and the virtual scenarios.
The user plays a videogame by connecting with the robot video game apparatus through its embodied actions in different physical environments.

These actions aim to accomplish different tasks in the videogame software.
The input signals from the users physical actions with the robot video game apparatus are processed in the multi-touch computer display. These inputs are detected through the wireless electronic sensors. The output is visualized in the multi-touch computer display, besides produced sound (music and "speech") and lights.

A computer with a multi-touch display integrated in the robot apparatus manages the videogame software.

The invention apparatus is to be used in mixed reality environments, virtual and physical reality/ combining virtual and physical spatial contexts (indoors and outdoors), allowing also for different geographical connections in a virtual/physical collaborative platform between various robot video game apparatuses.

The interactive videogame provides a connection in real-time with both realities: virtual and physical. Most of the developed scenarios aim to combine a symbolic intention from the virtual scenario, to be applied in the real physical environment where the user plays a video game narrative. The player can also program its video game narrative by building its own game.

The interactive videogame can be played by a single player or by multiple players. The users can interact collaboratively with the software by communicating (simultaneously) with the apparatus through their physical actions (and bio-signals). User's actions are connected with the wireless electronic sensors. User's can also play collaboratively in different spatial contexts (by sharing their physical and virtual performance).
One of the advantages of the interactive videogame is that enhances the playable area of video games, because it allows the game to be played indoors or outdoors (different physical contexts), connects to the user's bio-signals (enhanced human biologic data) and full body actions (enhanced human biomechanics data), and provides an off-line or online playable mode (provided that there is an online connection between players allover different geographical areas - same or different spatial physical areas).

Moreover, the users can share their videogame software experiences through video recording in real-time, sharing their physical and digital performances, to be visualized in the multi-touch computer display.

The player can control the level of intensity of the videogame interactions by controlling the wireless electronic sensors input intensity in the software video game.

Other of the advantages of this invention is that persuades the user to increase its physical activity levels and learning skills.

The system provides real-time information about the produced biomechanical and physiological data combined results, on an accurate measurement of the real- time state of the user's body (bio-signals): displacement on a spatial context; manipulations; heart rate data; and skin galvanic response data (emotional states); the system adapts the software response dynamically to motivate the user to undertake a course in the narrative to better suit its physical, physiological and psychological needs.
Furthermore, the users are persuaded to execute and learn different motor actions with their full bodies, and to understand and control their physiological data signals (what we defined as Bioception sensory modality), at the same time they are persuaded to learn about different theoretical fields (e. g. math, biology, chemistry, physics, anatomy, astronomy, science, ecology, among others).

The users play a videogame by performing different motor and physiological inputs, connected to plurality of provided wireless sensors. The invention has a plurality of detachable wireless sensors that can be connected in any part of the invention apparatus.

The wireless electronic sensors are connected to an I/O board wireless Bluetooth connection, which it's integrated in a multi-touch computer display as an internal interface board. This I/O board wirelessly captures and translates the wireless electronic sensors input signals with high resolution into digitally computer-encoded messages to the multi-touch computer display placed in the back of the invention apparatus.

All the input data from the electronic sensors is transmitted to a videogame software program inside the multi-touch computer display. The data is then processed by the software and converted into triggers that make the videogame react. The final result of the software process is then transmitted visually in the multi-touch computer display.

The user's physical actions input persuaded by the game tasks corresponds to common physical gestures walking, running, pushing, pulling, rotating, trotting, skating, pressing, catapulting, catching, throwing, among all the possible user's bodies physical actions. The connection to the physical environments is achieved by persuasive action, e. g., the user is persuaded to interact with the physical environment by moving the apparatus on the physical space. This action is captured by the wireless electronic sensors and remotely transferred to the software program.

Other functionality of the videogame is allowing collaborative actions during the proposed software videogame tasks: users can share the video game by playing with the same invention apparatus system and its components (e.g., multiple users pushing the invention apparatus); collaborate by playing and sharing multiple software videogame tasks in the same geographical spatial area with different invention apparatuses (through GPS and WEB server); collaborate online through GPS/Web server in different geographical spatial areas using different videogame system apparatuses.

Another advantage is that one of the components is a video camera that allows recording the user physical videogame experiences to be shared on-line.

The user can also control the wireless electronic sensors input intensity through the video game software changing the main characteristics of its role-play according with the pretended video game actions input.

Moreover, through the use of this invention users are persuaded to develop their cognitive, motor and social-affective competences by playing and creating their own video games narratives in mixed reality environments - physical and virtual. Also the persuaded physical activity goal its intended to achieve high physical activity levels exploring various forms of movement possibilities and increasing energy expenditure rates, which can result on preventing overweight and obesity pathologies, by promoting user's physical health.
Other advantage is the collective extended connection characteristic from the robot video game apparatus. Produced data is shared online (user's displacement on a spatial context; physical interactions; heart rate data; skin galvanic response data, etc) . These functions give to the invention the characteristics of being a worldwide contextual and embodied connection apparatus.

### Description of the drawings

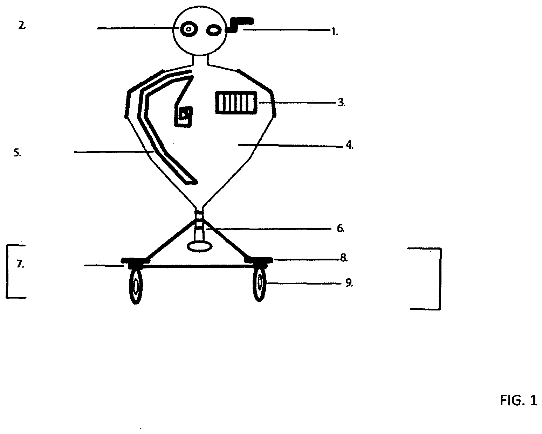

FIG. 1 - is a draw of the front of the embodied robot system videogame apparatus invention with the representative head of the robot with a mechanical lever and a led and sound sensor eye with camera; the rubber torso with a solar battery and sensors leds; the plastic leveler sensor and the triangular base with three suspensions, and the three rubber pneumatic wheels and feet support.

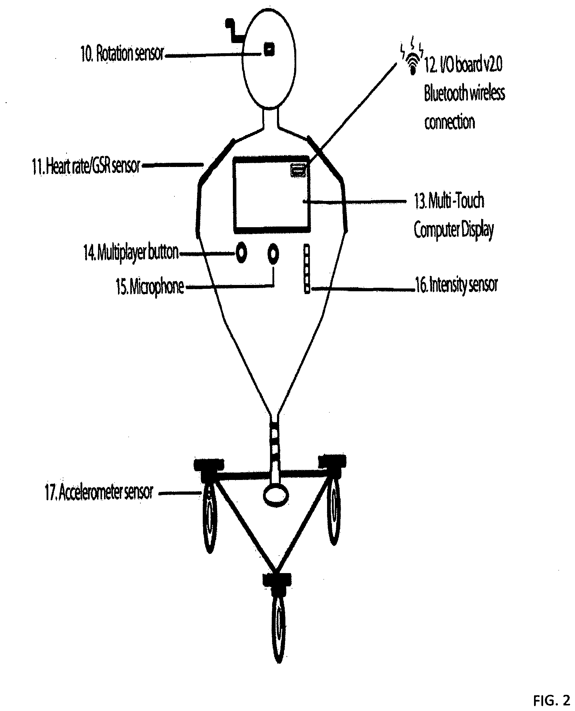

FIG. 2 - is a draw of the back of the embodied robot system videogame apparatus invention with the representative head of the robot with a rotation sensor; rubber torso integrating heart rate and galvanic skin response sensors; rubber torso integrating a multi-touch computer display with an I/O board (v2. 0 Bluetooth wireless connection), a multiplayer button, a microphone and an intensity sensor; an accelerometer sensor placed on the triangular base.

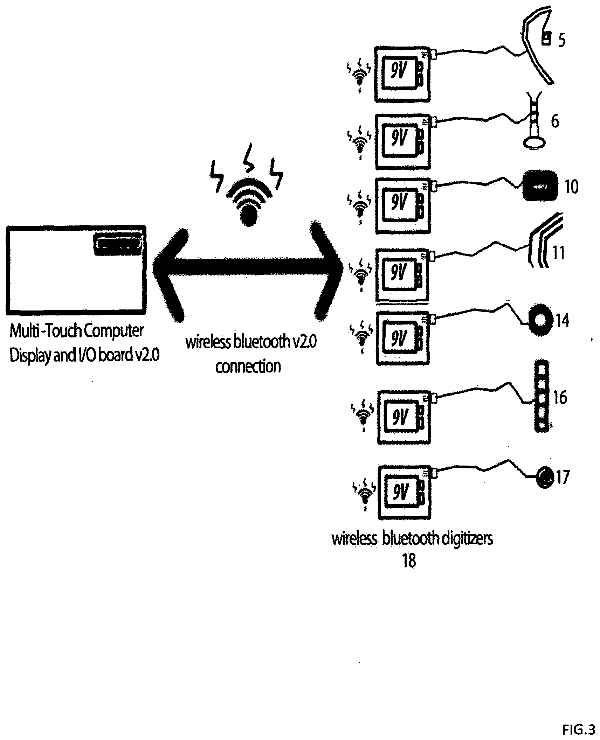

FIG. 3 - is a draw of the multi-touch computer display with its integrated I/O board v2.0, connected via wireless Bluetooth 2.0 with the wireless Bluetooth transceivers from the electronic sensors.

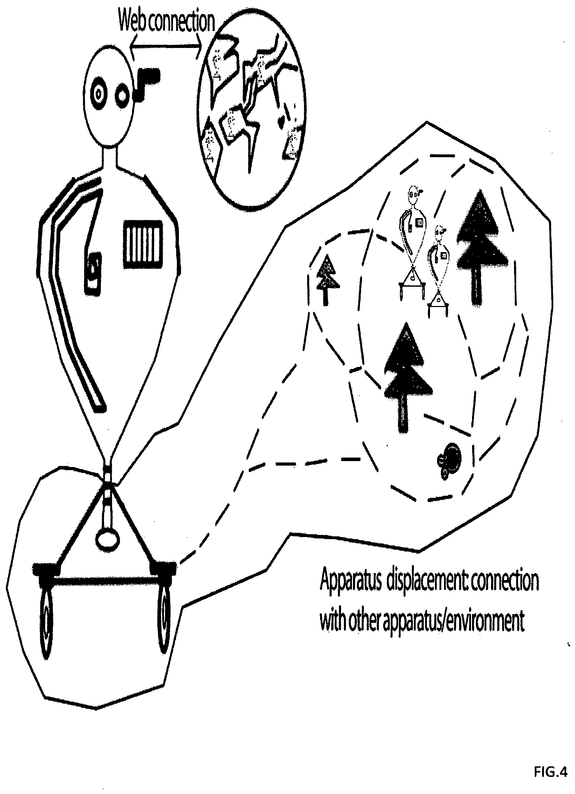

FIG. 4 - is a draw of the embodied robot system videogame apparatus invention and its online connection, other embodied robot system videogame apparatuses, and the surrounding environment.

### Detailed description of the invention

We will now make a detailed description of the invention, according with the previous presented figures.

The invention comprises the following components: the mechanical lever (1), the led/sound sensor eye (2) and a rotation sensor (10) on the head of the robot. The following components are placed on the rubber torso (4): the solar battery (3), the sensor leds (5), the heart rate and galvanic skin response sensor (11), the multi-touch computer display (13), with the I/O board v2. 0 Bluetooth wireless connection (12), the multiplayer button (14), microphone (15) and the intensity sensor (16).

The rubber torso (4) is supported by a triangular base which is composed with three mechanical shock absorbers (7), three rubber pneumatic wheels (9), feet support (8), and the accelerometer sensor (17).

Between the rubber torso (4) and the triangular base it's located a plastic leveler sensor (6).

The drawings represent an Interactive embodied robot videogame apparatus integrating electronic wireless sensors and physical objects with components.

The mechanical lever (1) has to components: a light bulb placed on the left frontal and lateral part of the robot head (simulating an eye and with a physical lever); a dynamo motor generator that converts user's hand physical manipulations (circular movements) into electrical energy to power a 2V light bulb. The mechanical lever (1) has 12 x 1.5 x 1 cm and it's connected with the 16 x 6 x 6 cm light bulb that supports the lever. The mechanical lever (1) weights 0.2 Kg.

The led/sound sensor eye (2) it is placed in the right frontal part of the robot head (simulating an eye). It translates the audio software videogame' s output in sound waves: robot's speech (audio language) and other produced sounds (e.g., music). The led/sound sensor eye (2) is connected to the multi-touch computer display (13) through a mini jack plug (0.35 cm) to acquire the videogame software output audio signal. Users can either switch the led/sound sensor eye (2) "On" and "Off" by pressing a button and adjust volume by turning a plastic wheel. This led/sound sensor eye (2) is recharged by the multi-touch computer display (13) via USB 2.0 connection with a 5V supply. The led/sound sensor eye (2) also has a single 1080p HD camera that allows for 720p/1080p video capture with frame rates from 1hz to 60 Hz. The led/sound sensor eye (2) has 2.5 x 2.5 x 2 cm and weights 0.07 Kg.

The rotation sensor (10) it's placed in the superior part of the embodied robot system videogame apparatus (back of the head). It calculates the apparatus position through the triple-axis earth's magnetic field: apparatus acceleration intensity, allowing for indentifying the invention apparatus position in three physical dimensions on spatial coordinates (e.g. "up", "down", "left", "right", "rotations"). This sensor gives digital input to the multi-touch computer display (13) videogame software with a range of ±1 Gauss and heading accuracy of 2.0 deg RMS at 0 deg tilt, 3.0 deg RMS at ±15 deg tilt, 4.0 0 RMS at ±60 deg tilt. This sensor measures 2.8 x 2.1 x 1 cm and weights 0.3 Kg.

The solar battery (3) it's placed in the front left side of the rubber torso (4), and it includes a 16V 210mA 2W solar panel that gives 19V power supply to the multi-touch computer display (13) gives constant charging through its fiberglass solar panels. The solar battery (3) recharges from 35 to 38 hours under strong direct sun light. It has 16 x 9 x 1.5 cm and weights 0.42 Kg.

The sensor leds (5) it's placed on the front right side of the embodied robot system videogame apparatus. It produces visible light while pressed and generates digital input to the multi-touch computer display (13), videogame software, according to the user's physical actions. The sensor leds (5) allows to identify the spatial areas where the pressure is made in the sensor leds (5) - identifies the pressure that the user produces (10 KPa - 0.10 kg/cm², 1.5 PSI) to 981 KPa (10.0 Kg/cm², 142 PSI), according to each 5mm area. It has 150 x 0.2 x 0.1 cm and weights 0.02 Kg.

The rubber torso (4) is made of dense rubber and allows for the user to control the embodied robot system videogame apparatus with its body (e.g. "push" and "pull"). The rubber torso (4) sustains the different electronic and mechanical components from the embodied robot system videogame apparatus: the solar battery (3), the sensor leds (5), the rotation sensor (10), the heart rate and galvanic skin response sensor (11), the multi-touch computer display (13), the multiplayer button (14), the microphone (15), and the intensity sensor (16). The rubber torso (4) has 80 x 50 x 25 cm, weights 65 Kg (including all its mechanical and electronic components), and it is connected at its bottom with a plastic leveler with sensor (6).

The heart rate and galvanic skin response sensor (11) is placed on the upper sides (left and right sides) of the rubber torso (4) allowing measuring the user's heart rate (heart rate variability) and galvanic skin response (calculates the variations of user's emotional states) in real-time. Each one of these sensors has one rectangular surface sensor pad (20.3 x 20.3 x 1.5 and weights 0.4 Kg) that is made of electrical conductive material to measure the skin temperature, heat flux and skin electrical conductivity. Data results from this sensor are visualized in the multi-touch computer display (13) videogame software.

The multiplayer button (14) is placed in the back left part of the rubber torso (4), and when pressed it starts the multiplayer function by activating the GPS function: it allows for the users to start a connection with other players by playing a collective game in the same (GPS connection) or different geographical location (a web server). The multiplayer button (14) measures the applied force by the user in a range of 0.1 cm, or 2.0 N (0.20 Kg) in real-time. It has 3 x 1.5 x 0.5 cm and it weights 0.01 Kg.

The microphone (15) it's placed in the back central part of the rubber torso (4). It's an acoustic-to-electric transducer that converts sound waves into an electrical signal. The microphone (15) captures the produced user's sound waves ("speech") and converts them to a digital signal to be recognized by the videogame software. Once these specific sound waves are analyzed, the software produces a wave sound output response through the led/sound sensor eye (2) to interact with the user. The microphone (15) connects to the multi-touch computer display (11) via cable TRS connector (input to the soundcard).

The intensity sensor (16) is a slider bar placed in back right part of the rubber torso (4), to measure the user's contact position in a range of 10 cm (linear resistive potentiometer). The user is persuaded to use this sensor (by sliding a rubber button in two directions), to control the videogame software tasks. It has 2.4 x 1.1 x 1.1 cm and weights 0.02 Kg.

The plastic leveler with sensor (6) is a plastic cylindrical structure with six protrusions that fit internally with the rubber torso (4). The plastic leveler with sensor (6) allows for the user to set different height levels for the rubber torso (from 80 to 160 cm), with a fitting sensors sprockets modulator system. The user personalizes the rubber torso's (4) height by pulling or pushing it "side-up" or "side-down" with its hands, and by selecting each one of the 5 sprockets levels, integrating 5 sensors for each level: responding to a pressure from approx. 4 KPa (0.04 Kg/cm², 0.6 PSI) to 98 N (10.0 Kg/cm², 142 PSI) or a force of approx. 0.6 N (0.60 Kg) to 98 N (10 Kg) that's evenly applied across its active area, in a 13 mm diameter disk. The plastic leveler with sensor (6) activates a wireless communication between its single wireless Bluetooth transceiver and the I/O board v2.0 Bluetooth wireless connection (12) placed in the multi-touch computer display (13). The digital and mechanical input (five sensors and five sprockets modulator system) is translated in the videogame software scenarios. The plastic leveler sensor (6) has 50 x 23 x 18 cm and weights 2 Kg.
The plastic leveler sensor (6) it's connected to a triangular base made with steel that it's wrapped with dense rubber. It sustains the robot torso, has 41 cm on each side, and weights 2.1 Kg. The triangular base integrates a three sponge feet support (8) for the user to place its feet, hands, etc, (allowing for the user to manipulate the apparatus in various ways), and supporting the users weight up to 120 KG.
The three sponge feet supports (8) have 15 x 13 x 3 cm and weight 0.3 Kg. The three sponge feet supports (8) are screwed to the suspensions, (7) through a steel base. One rubber suspensions, for each of the three sponge feet supports (8). Each of the suspensions, (7) has a diameter of 10 cm and supports the three rubber pneumatic wheels (9) (connected with a steel screwed bilateral system to the wheels circumference center). The three rubber pneumatic wheels (9) enable the apparatus displacement in different contextual and physical terrains. Each of the three rubber pneumatic wheels (9) has a 20 cm diameter and weights 1.5 Kg.
The accelerometer sensor (17) it's placed in one of the rubber pneumatic wheels in the embodied robot system videogame apparatus, triangular base (9). The accelerometer sensor (17) measures the dynamic acceleration (or deceleration) and inclination (tilt, i.e. acceleration due to gravitation) in three dimensions simultaneously (X, Y, Z). At the same time it calculates the triple-axis earth I s magnetic field (intensity and acceleration), allowing for the identification of the apparatus displacement characteristics in real-time. Data results are visualized and controlled in the videogame software in the multi-touch computer display (13), for e.g., activating the avatar displacement in the videogame software in real-time by "pushing" and "pulling" the embodied robot system videogame apparatus. It has 5.3 x 3.3 x 1.1 cm and it weights 0.02 Kg.

A Bluetooth wireless connection with the I/O board v2.0 (12) integrated in the multi-touch computer display (13) is established with the apparatus sensors connected with wireless Bluetooth transceivers (18). A single Bluetooth transceiver connects to each wireless electronic sensor: the rotation sensor (10), the sensor leds (5), the plastic leveler with sensor (6), the heart rate and galvanic skin response sensor (11), the multiplayer button (14), the intensity sensor (16) and the accelerometer sensor (17). All of these wireless sensors are detachable what gives the users the possibility of transforming the embodied robot system videogame apparatus appearance and interaction options. The assembly of the invention apparatus is modular, making the system personalized to each user. These sensors can be connected to the rubber torso (4), and to external environment to the apparatus, via Velcro strips.

The wireless Bluetooth transceivers (18) have a micro plastic box format. They perform a signal acquisition to a maximum of 100 meters distance and transmit digital messages to the multi-touch computer display (13) in real-time. Each one of the wireless Bluetooth transceivers (18) its coupled/attached to the sensors via an internal connection with a 3-pin column input cable extremity (2.54 mm / 0.1" spaced), which is then connected to an I²C port placed inside the wireless Bluetooth transceivers (18). The wireless Bluetooth transceivers (18) are empowered by a 9V battery (each one has 5 x 2.7 x 1.4 cm and weights 0.03 Kg).

The multi-touch computer display (13) is placed on the back central part of the embodied robot system videogame apparatus. The multi-touch computer display (13) is prepared for anti-shock and anti-vibration with a MIL810F system (shock Mounted Hard Drive). It has a sunlight readable display and it is prepared for dust, waterproof and high and low temperatures resistance (40°C to 50 °C). It has a 7" widescreen 1024x600 resolution/ TFT LCD. Its dimensions are 17 x 14 x 5 cm, with a weight of 1.1 Kg, with an ultra low power atom Z530 1.6 GHz processor (w/ US15W Chipset), 2 GB DDR2 RAM, a data Storage/Disk of 64 GB SSD solid state hard drive, and GPS included. The multi-touch computer display (13) includes the I/O board v2.0 (12) that establishes the v2.0 Bluetooth connection with the sensors (Bluetooth transceivers) wirelessly, with a 10 bits resolution (1024 steps of each 4.9 mV) that can sample at up to 5760 Hz milliseconds latency in real-time.

The apparatus invention is prepared for harsh environments - dust and waterproof and high/low temperatures resistance (40°C to 50°C).

## Claims

1. A robot apparatus incorporating a videogame and comprising:
- LED/sound sensor eye (2) comprising a video camera and being connected with a multi-touch computer display (13) executing said videogame through a cable so as to acquire the audio output signal from the videogame, and translating the videogame audio output into sound waves;
- mechanical lever(1) comprising a light bulb, a dynamo motor generator and a lever;
- a triangular base sustaining a rubber torso and comprising three feet supports (8) that are screwed to three rubber suspensions (7) and three rubber pneumatic wheels (9) for supporting a user's feet, the rubber torso (4) comprising:
- a battery (3),
- sensor LEDs (5),
- a rotation sensor (10),
- a heart rate and galvanic skin response sensor (11),
- the multi-touch computer display (13),
- a button (14),
- a microphone (15),
- a linear potentiometer (16),
which are connected to the rubber torso (4) by Velcro strips,
wherein:
the battery (3) comprises a solar panel for recharging the battery (3);
the sensor LEDs (5) comprise Bluetooth transceivers (18) and produce a visible light while pressed;
the rotation sensor (10) is placed in the superior part of the robot apparatus and is connected to a wireless Bluetooth transceiver (18);
the button (14) is placed in the rubber torso (4) and comprises a wireless Bluetooth transceiver (18) that when pressed starts a multiplayer function by activating an online connection;
the microphone (15) is placed in the rubber torso (4), and consist of an acoustic-to-electric transducer that converts sound waves into an electric signal and is connected to the multi-touch computer display (13) via cable TRS connector input to a soundcard;
the linear potentiometer (16) comprises a Bluetooth transceiver (18) and a potentiometer for the user to control the intensity of the game;
the multi-touch computer display is placed in the back of the apparatus and comprises an anti-shock and anti-vibration system, GPS, and an I/O board for V2.0 Bluetooth wireless connections (12) that establishes connections with each of the sensors (5, 6, 10, 11, 14, 16, 17) wirelessly;
and
wherein said wireless Bluetooth transceivers (18) of the apparatus comprise a micro plastic box and transmit digital messages to the multi-touch computer display (13) in real-time.

2. Robot apparatus according to claim 1, wherein the LED/sound sensor eye (2) is rechargeable through the multi-touch computer display (13) by USB connection.

3. Robot apparatus according to claim 1, wherein the heart rate and galvanic skin response sensor (11) comprises a wireless Bluetooth transceiver (18) and a rectangular pad made of electrical conductive material to measure the skin temperature, heat flux and skin electrical conductivity, by measuring the heart rate and the galvanic skin response of the user in real-time.

4. Robot apparatus according to claim 1, wherein the three feet supports (8) are screwed to rubber suspensions (7) through a steel base.

5. Robot apparatus according to claim 1, wherein each of the suspensions (7) supports a rubber pneumatic wheel (9) connected with a steel screwed bilateral system to the wheels circumference center.

6. Robot apparatus according to claim 1, wherein the accelerometer sensors (17) comprising a wireless Bluetooth transceiver (18) are placed in the rubber pneumatic wheels (9) which are connected with the triangular base.

7. Robot apparatus according to claim 1, wherein the wireless Bluetooth transceivers (18) are coupled to the wireless electronic sensors via an internal connection with a 3-pin column input cable, which is connected to an I2C port placed inside the wireless Bluetooth transceiver (18) and are recharged by a battery of 9V.

## Patentansprüche

1. Ein Robotergerät mit einem integrierten Videospiel, umfassend:
- LED/Ton-Sensorauge (2), die eine Videokamera umfasst, und an einen Multi-Touch Computerbildschirm (13) angeschlossen ist, der das besagte Videospiel über ein Kabel ausführt, um das Audioausgangssignal des Videospiels zu erfassen, und die Audioausgabe des Videospiels in Schallwellen umwandelt;
- mechanischen Hebel (1), umfassend eine Glühbirne, einen Dynamo-Motorgenerator und einen Hebel;
- einen dreieckigen Sockel, einen Gummitorso tragend und drei Fußstützen (8) umfassend, welche an drei Gummiaufhängungen (7) und drei pneumatischen Gummirädern (9) angeschraubt sind, um die Füße eines Benutzers zu unterstützen, der Gummitorso (4) umfassend:
- eine Batterie (3),
- Sensor-LEDs (5),
- einen Rotationssensor 10),
- einen Sensor für Herzfrequenz und galvanische Hautreaktion (11),
- den Multi-Touch Computerbildschirm (13),
- einen Knopf (14),
- ein Mikrofon (15),
- ein lineares Potenziometer (16),
welche an dem Gummitorso (4) durch Klettbänder befestigt sind,
wobei:
die Batterie (3) ein Solarmodul umfasst, um die Batterie (3) aufzuladen;
die Sensor-LEDs (5) Bluetooth Sender-Empfänger (18) umfassen und wenn gedrückt sichtbares Licht erzeugen;
der Rotationssensor (10) am oberen Teil des Robotergerätes angebracht ist und an einem drahtlosen Bluetooth Sender-Empfänger (18) angeschlossen ist;
der Knopf (14) am Gummitorso (4) angebracht ist und einen drahtlosen Bluetooth Sender-Empfänger (18) umfasst, welcher wenn gedrückt eine Multiplayer-Funktion durch die Aktivierung einer Online-Verbindung startet;
das Mikrofon (15) am Gummitorso (4) angebracht ist und aus einem elektroakustischen Wandler besteht, der die Schallwellen in elektrische Signale umwandelt und am Multi-Touch Computerbildschirm (13) über TRS-Kabelanschluss Eingang zu einer Soundkarte angeschlossen ist;
das lineare Potenziometer (16) einen Bluetooth Sender-Empfänger (18) und ein Potenziometer umfasst, damit der Benutzer die Intensität des Spiels regelt;
der Multi-Touch Computerbildschirm auf der Rückseite des Geräts angebracht ist und ein Anti-Schock und Anti-Vibration System, GPS und eine Ein-/Ausgangskarte für drahtlose Bluetooth v2.0 Verbindungen (12) umfasst, welche drahtlose Verbindungen mit jedem Sensor (5, 6, 10, 11, 14, 16, 17) herstellt;
und
wobei die besagten drahtlosen Bluetooth Sender-Empfänger (18) des Gerätes ein Mikro-Kunststoffgehäuse umfassen und digitale Meldungen in Echtzeit an den Multi-Touch Computerbildschirm (13) senden.

2. Robotergerät nach Anspruch 1, wobei das LED/Ton-Sensorauge (2) durch den Multi-Touch Computerbildschirm (13) über eine USB-Verbindung aufladbar ist.

3. Robotergerät nach Anspruch 1, wobei der Sensor für Herzfrequenz und galvanische Hautreaktion (11) einen drahtlosen Bluetooth Sender-Empfänger (18) und eine rechteckige Auflage aus elektrisch leitfähigem Material umfasst, um die Hauttemperatur, den Wärmefluss und die elektrische Leitfähigkeit der Haut durch die Messung der Herzfrequenz und der galvanischen Hautreaktion des Benutzers in Echtzeit zu messen.

4. Robotergerät nach Anspruch 1, wobei die drei Fußstützen durch einen Stahlsockel (8) an Gummiaufhängungen (7) angeschraubt sind.

5. Robotergerät nach Anspruch 1, wobei jede Aufhängung (7) ein pneumatisches Gummirad (9) trägt, welches über ein bilaterales stahlverschraubtes System mit dem Zentrum des Radumfangs verbunden ist.

6. Robotergerät nach Anspruch 1, wobei die Sensoren des Beschleunigungsmessers (17), die einen drahtlosen Bluetooth Sender-Empfänger (18) umfassen, an den pneumatischen Gummirädern (9) angebracht sind, die mit dem dreieckigen Sockel verbunden sind.

7. Robotergerät nach Anspruch 1, wobei die drahtlosen Bluetooth Sender-Empfänger (18) über eine interne Verbindung mit einem dreipoligen Spalten-Eingangskabel an den drahtlosen elektronischen Sensoren angekoppelt sind, welches mit einem in den drahtlosen Bluetooth Sender-Empfänger (18) gelegten I2C Port verbunden ist, und von einer 9V-Batterie aufgeladen werden.

## Revendications

1. Un appareil robot incorporant un jeu vidéo et comprenant
- oeil capteur LED/son (2) comprenant une caméra vidéo et étant connecté à un écran d'ordinateur multi-tactile (13), exécutant ledit jeu vidéo à travers un câble afin d'acquérir un signal de sortie audio du jeu vidéo, et traduisant la sortie audio du jeu vidéo en vagues sonores ;
- levier mécanique (1) comprenant une ampoule électrique, une génératrice de moteur dynamo et un levier ;
- une base triangulaire soutenant un torse en caoutchouc et comprenant trois supports de pied (8) qui sont vissés à trois suspensions en caoutchouc (7) et trois roues pneumatiques en caoutchouc (9) pour supporter les pieds d'un utilisateur, le torse en caoutchouc (4) comprenant :
- une batterie (3),
- des LEDs capteurs (5),
- un capteur de rotation (10),
- un capteur à réponse galvanique de la peau et à fréquence cardiaque (11),
- l'écran d'ordinateur multi-tactile (13),
- un bouton (14)
- un microphone (15),
- un potentiomètre linéaire (16),
qui sont connectés au torse en caoutchouc (4) par des lanières en Velcro,
où :
la batterie (3) comprend un panneau solaire pour recharger la batterie (3) ;
les LEDs capteurs (5) comprennent des émetteurs-récepteurs Bluetooth (18) et produisent une lumière visible lorsque pressées ;
le capteur de rotation (10) est placé dans la partie supérieure de l'appareil robot et est connecté à un émetteur-récepteur Bluetooth sans fil (18) ;
le bouton (14) est placé sur le torse en caoutchouc (4) et comprend un émetteur-récepteur Bluetooth sans fils (18) qui, lorsque pressé, déclenche une fonction multijoueur en activant une connexion en ligne;
le microphone (15) est placé sur le torse en caoutchouc (4) et consiste en un transducteur acoustique à électrique qui convertit les vagues sonores en un signal électrique et est connecté à l'écran d'ordinateur multi-tactile (13) via un connecteur TRS de câble entrée à une carte son;
le potentiomètre linéaire (16) comprend un émetteur-récepteur Bluetooth (18) et un potentiomètre pour que l'utilisateur contrôle l'intensité du jeu ;
l'écran d'ordinateur multi-tactile est placé au dos de l'appareil et comprend un système anti-vibrations et antichoc, GPS et une carte I/O pour des connexions sans fil Bluetooth v2.0 (12) qui établit des connexions avec chacun des capteurs (5, 6, 10, 11, 14, 16, 17) sans fil ; et
où lesdits émetteurs-récepteurs Bluetooth sans fil (18) de l'appareil comprennent une micro boîte en plastique et transmettent des messages numériques à l'écran d'ordinateur multi-tactile (13) en temps réel.

2. Appareil robot selon la revendication 1, où l'oeil de capteur du son/LED (2) est rechargeable à travers l'écran d'ordinateur multi-tactile (13) par une connexion USB.

3. Appareil robot selon la revendication 1, où le capteur à réponse galvanique de la peau et à fréquence cardiaque (11) comprend un émetteur-récepteur Bluetooth sans fil (18) et un bloc rectangulaire fait de matériau conducteur électrique pour mesurer la température de la peau, le flux de chaleur et la conductivité électrique de la peau, en mesurant la fréquence cardiaque et la réponse galvanique de la peau de l'utilisateur en temps réel.

4. Appareil robot selon la revendication 1, où les trois supports à pied (8) sont vissés aux suspensions en caoutchouc (7) à travers une base en acier.

5. Appareil robot selon la revendication 1, où chacune des suspensions (7) supporte une roue pneumatique en caoutchouc (9) connectée à un système bilatéral vissé en acier au centre de circonférence des roues.

6. Appareil robot selon la revendication 1, où les capteurs d'accéléromètre (17) comprenant un émetteur-récepteur Bluetooth sans fil (18) sont placés dans les roues pneumatiques en caoutchouc (9) qui sont connectées à la base triangulaire.

7. Appareil robot selon la revendication 1, où les émetteurs-récepteurs Bluetooth sans fil (18) sont couplés aux capteurs électroniques sans fil via une connexion interne avec un câble d'entrée à colonne à 3 broches, qui est connecté à un port I2C placé à l'intérieur de l'émetteur-récepteur Bluetooth sans fil (18), et sont rechargés par une batterie de 9V.
